Europäisches Patentamt

European Patent Office

Office européen des brevets

(11) Publication number: **0 346 991**
**A1**

# EUROPEAN PATENT APPLICATION

(21) Application number: 89201526.4

(51) Int. Cl.4: **B65G 33/02**

(22) Date of filing: 12.06.89

(30) Priority: 17.06.88 NL 8801552

(43) Date of publication of application:
20.12.89 Bulletin 89/51

(84) Designated Contracting States:
AT BE CH DE ES FR GB GR IT LI LU NL SE

(71) Applicant: Geerts, Johannes Gerhardus
Christianus
Westerduinweg 32
NL-2116 VH Bentveld(NL)

(72) Inventor: Geerts, Johannes Gerhardus
Christianus
Westerduinweg 32
NL-2116 VH Bentveld(NL)

(74) Representative: Iemenschot, Johannes
Andreas et al
Exterpatent P.O. Box 90649
NL-2509 LP The Hague(NL)

(54) Device for separating and conveying one by one flat objects transported on a rod.

(57) A device for separating and conveyng one by one generally flat objects (5), such as rings or wire hooks, transported on a rod (1), which have a radial play relative to the outline of the rod, comprises at least one ring-shaped or disc-shaped separating element (2,3;11) of relatively small thickness in the axial direction and rotatable around its axis. The separating element - viewed circumferentially - is interrupted and, at the location of the interruption, is bent outwards in the axial direction and is placed coaxially on the rod and with the portion that is bent outwards towards the side of the objects on the rod (1,18) which are to be separated. The upstream part (6) of the rod relative to this element - viewed in the direction of transport of the objects (5) - is provided with means for propelling the objects towards the separating element (2).

FIG. 1.

# Device for separating and conveying one by one flat objects transported on a rod.

In distribution centres for clothing articles of clothing hanging on clothes hangers are supplied in mass, the clothes hangers generally hanging close together on long rods. The supplied articles of clothing are to be distributed over a number of points and to that end, the articles of clothing must be separated form each other and transported individually to one of the number of points.

The object of the present invention is to provide a device by means of which clothes hangers or suchlike objects can be clearly separated form each other.

This object is achieved by a device for separating and conveying one by one generally flat objects, such as rings or wire hooks, supplied on a rod, which have a radial play relative to the outline of the rod, comprising at least one ring-shaped or disc-shaped separating element of relatively small thickness in axial direction and rotatable around its axis, which - viewed circumferentially - is interrupted, and, at the location of the interruption, is bent outwards in the axial direction and is placed coaxially and with the portion that is bent outwards towards the side of the objects on the rod which are to be separated, and is drivable, the upstream part of the rod relative to this element - viewed in the direction of transport of the objects - being provided with means for propelling the objects towards the separating element.

The portion which is bent outwards of the separating element can, when the separating element rotates around its axis, engage behind a hook of a first clothes hanger in a row of clothes hangers being supplied and lying closely together, and, thus, can separate this first clothes hanger of the row from the remainder of the row. With the device according to the invention it is possible to separate the clothes hangers clearly form each other and convey them one by one.

The bent separating element preferably consists of a flat, circular disk which is provided with a radial incision which ends towards the inside in a through cut concentric with the rod and with an arc length of at least 60°, the incised portion of the disc being bent outwards in such a way that the distance between the free end portion of the cut-out portion which is bent outwards, and the plane of the portion which is not bent outwards, is a little greater than the thickness of the objects to be separated.

Such a separating element is cheap and easy to produce, although nevertheless a clear separation of the clothes hangers is achieved therewith.

Expediently, in the separating device according to the invention, the rod is rotatable, the separating element is fixed to the rod, and the propelling means consist of a helicoidal boss on the upstream rod portion.

The device according to the present invention will now be more clearly described with reference to the drawings, in which:

Fig. 1 shows diagrammatically a possible embodiment of the device according to the invention;

Fig. 2 is a view of a possible embodiment of a separating element of the device shown in Fig. 1;

Fig. 3 is a view of the separating element shown in Fig. 1 viewed in the direction of the arrow III;

Fig. 4 is a view of the separating element shown in Fig. 1, viewed in the direction of the arrow IV;

Fig. 5 is a view of a possible alternative embodiment of a separating element of the device shown in Fig. 1;

Fig. 6 shows the separating element shown in Fig. 4, fixed to a shaft by welding or brazing:

Fig. 7 shows the separating element shown in Fig. 5, fixed to the shaft by means of locking rings; and

Fig. 8 shows a part of the device shown in Fig. 1 with two crossed clothes hanger hooks.

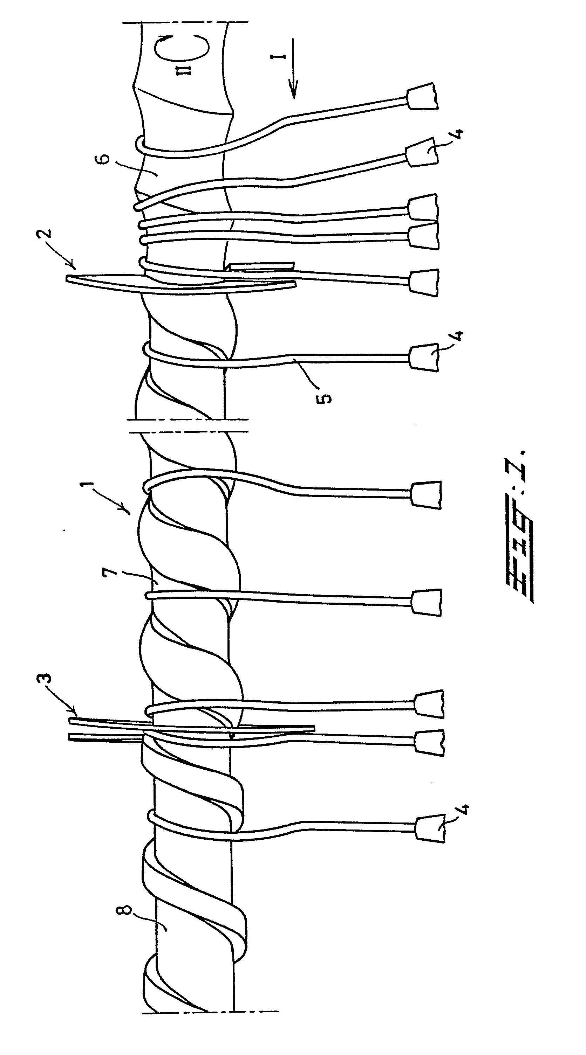

In Fig. 1 a possible embodiment of a device for separating clothes hangers is diagrammatically shown. The device comprises a rod 1 which is rotatable around its axis, on which two separating elements 2 and 3 are located. For transporting the clothes hangers 4 with hooks 5, the rod 1 is provided with a helicoidal profile. This profile is different for different sections of the rod. The upstream section 6 of the rod is provided with a profile having a wave-shaped cross-section, the top of the wave presenting an angle. The section 6 is designated as upstream section since the clothes hangers to be separated are supplied in the direction of the arrow I. This section 6 of the rod 1 sees to it that the clothes hangers lying close together are transported towards the first separating element 2. The section 7 of the rod 1 located between the two separating elements has a rounded profile, e.g. with a cross-section shaped as an arc of a circle. Because of the shape of this profile, a hook 5 will always slide in the groove formed by the profile. The section 8 of the rod located to the left of the second separating element 3 in the drawing has a profile with a rectangular cross-section, by which the hooks on this section are clearly separated. It will be obvious that, when the rod 1 rotates in the direction of the arrow II, the clothes hangers 4 with the hooks 5 are transported form right to left in the drawing.

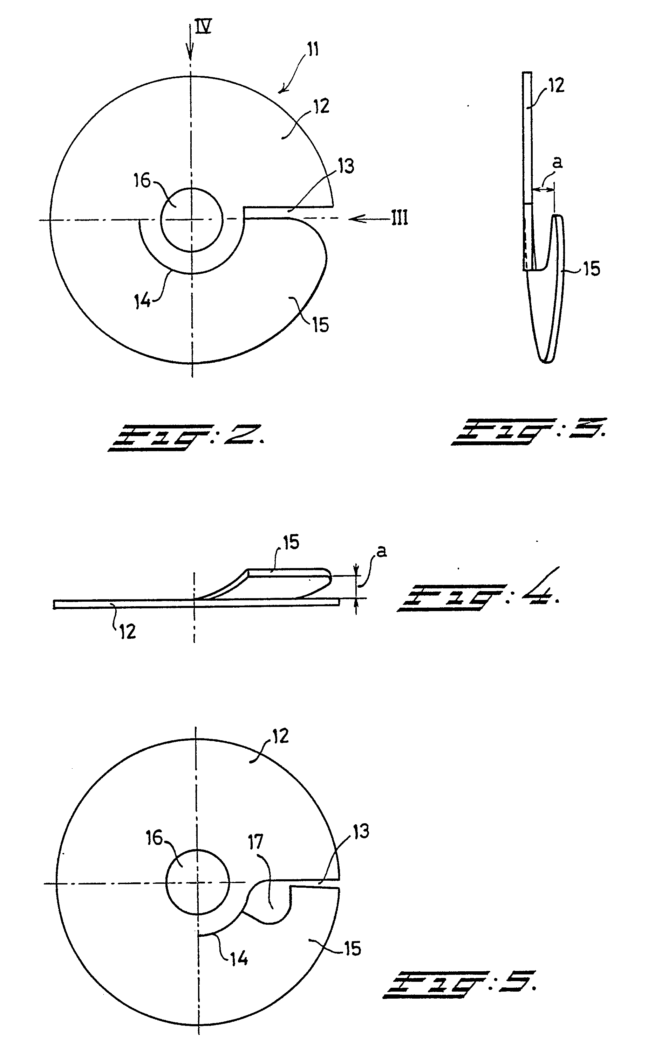

In Figs. 2-4 a possible embodiment is shown of a separating element of the device according to the invention.

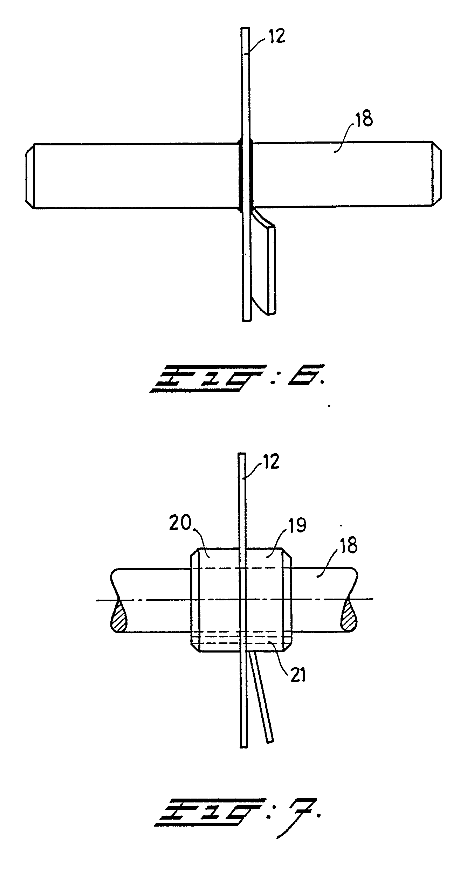

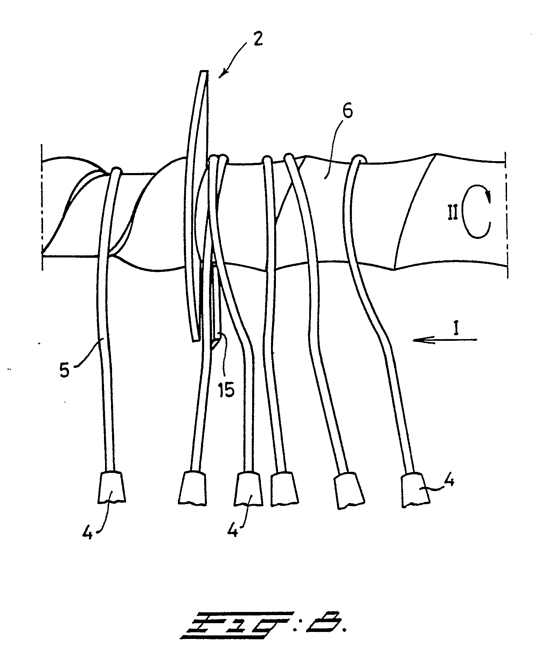

The separating element 11 consists of a flat, round disc 12 which is provided with a radial incision 13. The incision ends in a through cut 14 which runs around the centre of the disc over an arc length of about 180°. The lip 15 formed thereby is bent outwards in the axial direction of the disc, and this in such a manner that the distance between the free end portion of the lip 15 which is bent outwards and the portion of the disc which is not bent outwards, as indicated in Figs. 3 and 4 by a, is a little greater than the thickness of the objects to be separated, in this case the hooks 5 of the clothes hangers 4. The disc 12 is provided in its centre with a hole 16, by which the separating element can be mounted on a rod, such as the rod 1.

In Fig. 5, another possible embodiment of a separating element according to the invention is shown. The separating element shown in Fig. 5 is similar to that shown in Fig. 2, but with the difference that at the end of the incision 13 an additional aperture 17 is provided in the lip 15, and the through cut 14 extends over an arc length of about 90°.

The separating element 11 can be fixed to a rod 18 extending through the hole 16 in the disc by welding or brazing, as indicated in Fig. 6, or by means of locking rings 19 and 20 which are fixed to the rod 18 on either side of the disc 12, as indicated in Fig. 7. In order to fixedly connect the disc 12 with the rings 19 and 20, one or more locking pins 21 may be provided in the axial direction transversely through both rings 19 and 20 and the disc 12.

The operation of the device according to the invention will now be elucidated with reference to Fig. 1.

The clothes hangers 4 with hooks 5 to be separated from one another are generally hung close together on the section 6 of the rod 1 rotating in the direction of the arrow II. Due to the profile on the section 6, the clothes hangers are, as it were, propelled in the direction of the first separating element 2. Since the separating element 2 is fixed to the rod 1, at a certain moment the lip 15 which is bent outwards in the axial direction will engage behind the hook of the first clothes hanger of the row of clothes hangers present on the section 6 of the rod 1. As the rod is rotated further, this hook is separated from the rest of the hooks on the section 6, and is transported to the other side of the separating element due to the screw action of the separating element 2, and is finally dropped onto the section 7 of the rod 1, the hook dropping into the helicoidal groove inbetween the rounded helicoidal profile. The hook is then transported onwards in the direction of the second separating element 3. This second separating element 3 operates in the same way as the first separating element 2. The second separating element 3 sees to it that, if two hooks of clothes hangers should still be close together in the section 7 of the rod, these two hooks are separated from each other, so that, finally, a clear separation of all clothes hangers is assured. The second separating element 3 carries the hooks of the clothes hangers from the second section 7 of the rod 1 to the third section 8 of the rod 1 with the rectangular helicoidal profile. Thereby it is achieved that the distance between the hooks of the clothes hangers will always be substantially equal to the pitch of the helicoidal profile. The clothes hangers are discharged by the section 8 of the rotating rod 1.

Both separating elements 2 and 3 shown in Fig. 1 are, in principle, formed in the same manner. In Fig. 1, however, they are drawn in different positions. The separating element 2 is drawn in the position in which the lip 15 is just engaging behind the hook of a clothes hanger, whereas the separating element 3 is drawn in the position in which the separating element is rotated further over approximately 180°.

The separating element herein described is also well suited to the purpose of separating hooks of clothes hangers which are crossed over each other. During the rotation of the rod 1 in the direction of the arrow II, the lip 15 of the separating element 2 will, at a certain moment, penetrate between the two crossed hooks (see Fig. 8). Since, as mentioned before, the distance between the lip of the separating element which is bent outwards and the portion which is not bent outwards is only a little greater than the thickness of the objects to be separated, the chance of the lip 15 engaging behind the two crossed hooks will be practically nil. As the separating element rotates further, the lip 15 will force the two crossed hooks ever further away from each other and, finally, separate the two hooks entirely.

It will be obvious that the device according to the invention with the separating elements herein described is not merely suited for separating the hooks of clothes hangers, but also for separating various other substantially flat objects, for instance rings, which have such a play relative to the rod that the separating element can, as it were, screw its way through the object.

The invention is not limited to a separating device with separating elements with the shape described above. The separating elements can also consist of a disc or ring bent helically in the circumferential direction. It is also possible to form the separating element from a stiff wire bent in a spiral shape.

## Claims

1. Device for separating and conveying one by one generally flat objects (5), such as rings or wire hooks, transported on a rod (1), which have a radial play relative to the outline of the rod, comprising at least one ring-shaped or disc-shaped separating element (2,3;11) of relatively small thickness in the axial direction and rotatable around its axis, which - viewed circumferentially - is interrupted and, at the location of the interruption, is bent outwards in the axial direction and is placed coaxially and with the portion that is bent outwards towards the side of the objects on the rod (1,18) which are to be seperated and is drivable, the upstreeam part (6) of the rod relative to this element - viewed in the direction of transport of the objects (5) - being provided with means for propelling the objects towards the separating element (2).

2. Separating device according to claim 1, characterized in that the bent separating element (2,3;11) consists of a flat, circular disc (12) which is provided with a radial incision (13) which ends towards the inside in a through cut (14) concentric with the rod (1,18) and with an arc length of at least 60°, the incised portion (15) of the disc being bent outwards in such a way that the distance between the free end portion of the portion which is bent outwards (15), and the plane of the portion which is not bent outwards, is a little greater than the thickness of the objects (5) to be separated.

3. Separating device according to claim 1 or 2, characterized in that the rod (1) is rotatable, the separating element (2,3) is fixed to the rod and the propelling means consist of a helicoidal boss on the upstream rod portion (6).

*Fig. 1.*

EP 0 346 991 A1

EP 0 346 991 A1

FIG. 2.

FIG. 3.

FIG. 4.

FIG. 5.

$\equiv I\sqsubseteq : 6.$

$\equiv I\sqsubseteq : 7.$

FIG:8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-U-8 802 172 (W. PAVEL) * Whole document * ----- | 1-3 | B 65 G 33/02 |

TECHNICAL FIELDS SEARCHED (Int. Cl.4)

B 65 G

The present search report has been drawn up for all claims

| Place of search | Date of completion of the search | Examiner |
|---|---|---|
| THE HAGUE | 07-09-1989 | VAN ROLLEGHEM F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P0401)